# EUROPÄISCHE PATENTANMELDUNG

(11) **EP 2 495 839 A1**
(43) Veröffentlichungstag der Anmeldung: **05.09.2012**
(21) Anmeldenummer: 11156574.3
(22) Anmeldetag: 02.03.2011
(51) Int. Cl.: H02J 3/38

(54) **Energiesystem**

(71) Anmelder: ABB Technology AG, 8050 Zürich (CH)
(72) Erfinder: Harder, Thorsten, 5306, Tegerfelden (CH); Thoma, Marco, 5503 Schafisheim (CH); Haederli, Christoph, 8047, Zürich (CH); Neutz, Michael, 79761, Waldshut (DE)
(74) Vertreter: ABB Patent Attorneys

(57) **Zusammenfassung**

Es wird ein Energiesystem mit mindestens zwei Turbinen (1) angegeben, welche als Gezeitenkraftenergieturbine, Windkraftturbine, Wellenkraftenergieturbine oder Wasserkraftturbine ausgebildet sind, wobei jede Turbine (1) mit einem Generator (2) verbunden ist und jeder Generator (2) eine Wechselspannung erzeugt, wobei die Wechselspannungen dieselbe Frequenz (f) aufweisen. Für einen flexiblen Betrieb, einen verbesserten Wirkungsgrad, sowie für einen einfachen, wartungsfreundlichen und robusten Aufbau des Energiesystems mit einer geringen Anzahl an Einzelkomponenten ist die die Frequenz (f) zeitvariabel ist und eine Umrichtereinheit (3) zur elektrischen Anbindung an ein elektrisches Wechselspannungsnetz (4) vorgesehenen, wobei die Generatoren (2) mit der Umrichtereinheit (3) verbunden sind.

## Beschreibung

### Technisches Gebiet

Die Erfindung bezieht sich auf das Gebiet der erneuerbaren Energien. Sie geht aus von einem Energiesystem gemäss dem Oberbegriff des unabhängigen Anspruchs.

### Stand der Technik

Gezeitenkraftenergiesysteme, aber auch Windenergiesysteme, Wellenkraftenergiesysteme und Wasserkraftenergiesysteme, wie sie heute aufgrund schwindender Energieressourcen verstärkt als alternative Energielieferanten eingesetzt werden, gewinnen heute aufgrund schwindender Ressourcen immer mehr an Bedeutung. Beispielsweise Windenergiesysteme werden gängigerweise an Land oder vor der Küste im Meer errichtet. Gezeitenkraftenergiesysteme wiederum werden typischerweise auf dem Meeresboden installiert, wobei der Tidenhub oder die Strömung des Meerwassers als primäre Energiequelle ausgenutzt wird. Wellenkraftenergiesysteme können landnah als auch auf dem offenen Meer installiert werden. Vertreter der Wasserkraftenergiesysteme sind beispielsweise Laufwasserkraftwerke, Pumpspeicherkraftwerke usw..

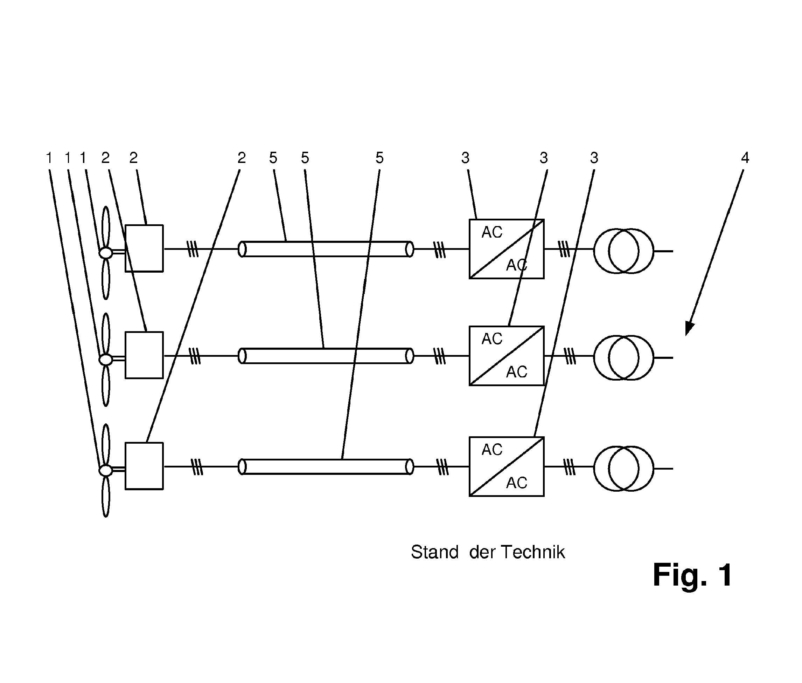

Ein gattungsgemässes Energiesystem weist allgemein mindestens zwei Turbinen auf, welche als Gezeitenkraftenergieturbine, Windkraftturbine, Wellenkraftenergieturbine oder Wasserkraftturbine ausgebildet sein können, wobei jede Turbine mit einem Generator verbunden ist und jeder Generator eine Wechselspannung erzeugt, wobei die Wechselspannungen dieselbe Frequenz aufweisen und sich die Frequenz über der Zeit typischerweise nicht ändert. Damit sind aber die Generatoren typischerweise nicht drehzahlvariabel betreibbar, wodurch die Generatoren nicht optimal ausgenutzt werden können und der Wirkungsgrad des Energiesystems gering ist. Beispielhaft ist ein solches Energiesystem, insbesondere ein Gezeitenenergiesystem, nach dem Stand der Technik in Fig. 1 dargestellt. Gemäss Fig. 1 sind drei Gezeitenkraftenergieturbinen 1 vorgesehen, wobei jede Gezeitenkraftenergieturbine 1 mit einem Generator 2 verbunden. Desweiteren ist jeder Generator 2 mit einer zugehörigen Umrichtereinheit 3 verbunden, die der elektrischen Anbindung an ein elektrisches Wechselspannungsnetz 4 dient. Bei den in Fig. 1 gezeigten drei Generatoren 2 sind also auch drei Umrichtereinheiten 3 notwendig. Die Verbindung des jeweiligen Generators 2 mit der zugehörigen Umrichtereinheit 3 ist durch ein Wechselstromkabel 5 realisiert.

Gerade aber bei Energiesystemen, die im Meer Off-Shore installiert sind, beispielsweise bei Gezeitenkraftenergiesystemen, welche typischerweise unter der Wasseroberfläche installiert sind, ist es aus Installationsgründen sowie aus Wartungsgründen nicht erwünscht, wenn viele Einzelkomponenten, wie Umrichtereinheiten 3 und Verbindungen, beispielsweise ausgebildet als Wechselstromkabel 5, zwischen den Umrichtereinheiten 3 und den zugehörigen Generatoren 2 vorhanden sind. Zudem sind solche Energiesysteme störungsanfällig, haben hohe Ausfallraten und die Verfügbarkeit ist dementsprechend gering. Zudem sind solche Energiesysteme teuer bezüglich Realisierung und Wartung.

### Darstellung der Erfindung

Aufgabe der Erfindung ist es deshalb, ein Energiesystem anzugeben, welches flexibel betrieben werden kann und einen verbesserten Wirkungsgrad aufweist, einfach und wartungsfreundlich aufgebaut und robust ist und mit einer geringen Anzahl an Einzelkomponenten auskommt. Diese Aufgabe wird durch die Merkmale des Anspruchs 1 gelöst. In den abhängigen Ansprüchen sind vorteilhafte Weiterbildungen der Erfindung angegeben.

Das erfindungsgemässe Energiesystem umfasst allgemein mindestens zwei Turbinen, welche als Gezeitenkraftenergieturbine, Windkraftturbine, Wellenkraftenergieturbine oder Wasserkraftturbine ausgebildet sind. Jede Turbine ist mit einem Generator verbunden und jeder Generator erzeugt eine Wechselspannung, wobei die Wechselspannungen der Generatoren dieselbe Frequenz aufweisen. Nach der Erfindung ist die Frequenz zeitvariabel. Eine Änderung der Frequenz über der Zeit ist also möglich. Dadurch können die Generatoren zusammen drehzahlvariabel betrieben werden, wodurch die Generatoren optimal ausgenutzt werden können und demzufolge der Wirkungsgrad des Energiesystems erhöht werden kann. Das Energiesystem lässt sich durch die Zeitvariabilität der Frequenz und den damit einhergehenden gemeinsamen drehzahlvariablen Betrieb der Generatoren sehr flexibel Betreiben. Desweiteren ist eine Umrichtereinheit zur elektrischen Anbindung an ein elektrisches Wechselspannungsnetz vorgesehenen, wobei die Generatoren mit der Umrichtereinheit verbunden sind. Da lediglich eine Umrichtereinheit vorgesehen ist, ist die Anzahl Einzelkomponenten des Energiesystems gegenüber einem Energiesystem nach dem Stand der Technik signifikant reduziert. Das erfindungsgemässe Energiesystem ist durch diese Massnahme einfach und wartungsfreundlich aufgebaut, ist robust und zeichnet sich durch eine hohe Verfügbarkeit aus. Zudem lässt sich das erfindungsgemässe Energiesystem aufgrund der vorstehend genannten Massnahmen und Eigenschaft kostengünstig realisieren.

Diese und weitere Aufgaben, Vorteile und Merkmale der vorliegenden Erfindung werden aus der nachfolgenden detaillierten Beschreibung von bevorzugten Ausführungsbeispielen der Erfindung in Verbindung mit der Zeichnung offensichtlich.

### Kurze Beschreibung der Zeichnungen

Es zeigt:
- Fig. 1: eine Ausführungsform eines Energiesystems, insbesondere eines Gezeiten-energiesystems, nach dem Stand der Technik,
- Fig. 2: eine erste Ausführungsform des erfindungsgemässen Energiesystems, ins-besondere eines Gezeitenenergiesystems,
- Fig. 3: eine zweite Ausführungsform des erfindungsgemässen Energiesystems, ins-besondere eines Gezeitenenergiesystems,
- Fig. 4: eine dritte Ausführungsform des erfindungsgemässen Energiesystems, ins-besondere eines Gezeitenenergiesystems und
- Fig.5: eine vierte Ausführungsform des erfindungsgemässen Energiesystems, ins-besondere eines Gezeitenenergiesystems.

Die in der Zeichnung verwendeten Bezugszeichen und deren Bedeutung sind in der Bezugszeichenliste zusammengefasst aufgelistet. Grundsätzlich sind in den Figuren gleiche Teile mit gleichen Bezugszeichen versehen. Die beschriebenen Ausführungsformen stehen beispielhaft für den Erfindungsgegenstand und haben keine beschränkende Wirkung.

### Wege zur Ausführung der Erfindung

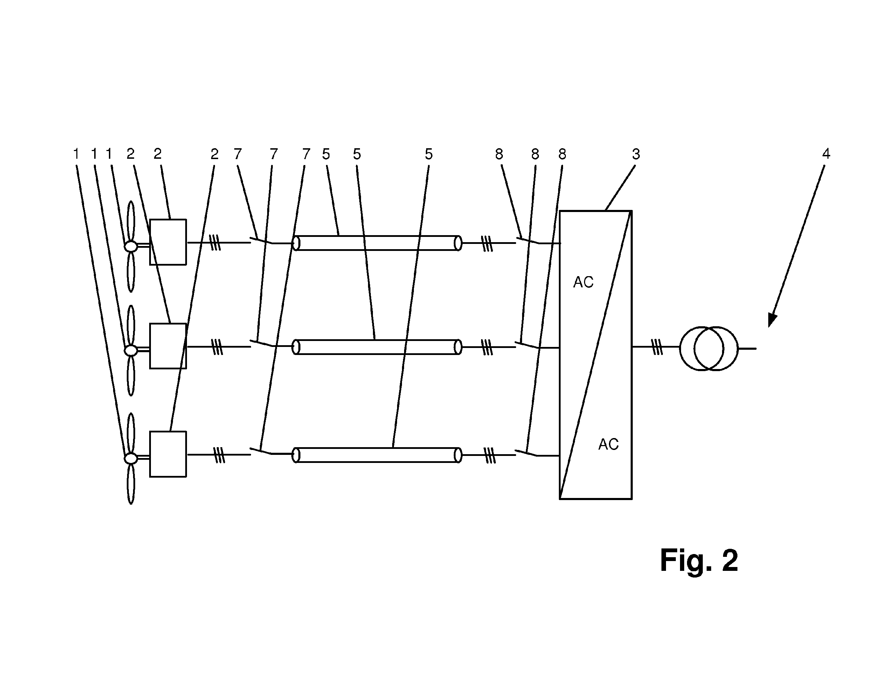

In Fig. 1 ist die bereits eingangs erwähnte Ausführungsform eines Energiesystems, insbesondere eines Gezeitenenergiesystems, nach dem Stand der Technik gezeigt. Fig. 2 zeigt nun eine erste Ausführungsform des erfindungsgemässen Energiesystems, insbesondere eines Gezeitenenergiesystems. Das erfindungsgemässe Energiesystem nach Fig. 2 umfasst allgemein mindestens zwei Turbinen 1, welche als Gezeitenkraftenergieturbine im Falles eines Gezeitenenergiesystems, Windkraftturbine im Falle eines Windenergiesystems, Wellenkraftenergieturbine im Falle eines Wellenkraftenergiesystems oder Wasserkraftturbine im Falle eines Wasserkraftenergiesystems ausgebildet sind. Jede Turbine 1 ist mit einem Generator 2 verbunden und jeder Generator 2 erzeugt eine Wechselspannung, wobei die Wechselspannungen der Generatoren 2 dieselbe Frequenz f aufweisen. Nach der Erfindung ist die Frequenz f zeitvariabel, d.h. eine Änderung der Frequenz f über der Zeit ist also möglich. Durch die Zeitvariabilität der Frequenz f können die Generatoren 2 zusammen drehzahlvariabel betrieben werden, wodurch die Generatoren 2 optimal ausgenutzt werden können und demzufolge der Wirkungsgrad des Energiesystems erhöht werden kann. Das Energiesystem lässt sich durch die Zeitvariabilität der Frequenz f und den damit einhergehenden gemeinsamen drehzahlvariablen Betrieb der Generatoren 2 sehr flexibel Betreiben. Desweiteren ist eine Umrichtereinheit 3 zur elektrischen Anbindung an ein elektrisches Wechselspannungsnetz 4 vorgesehenen, wobei die Generatoren 2 mit der Umrichtereinheit 4 verbunden sind. Da gemäss Fig. 1 nur eine Umrichtereinheit 4 vorgesehen ist, ist die Anzahl Einzelkomponenten des Energiesystems gegenüber einem Energiesystem nach dem Stand der Technik deutlich reduziert. Das Energiesystem nach der Erfindung ist durch diese Massnahme einfach und wartungsfreundlich aufgebaut, ist robust und zeichnet sich durch eine hohe Verfügbarkeit aus.

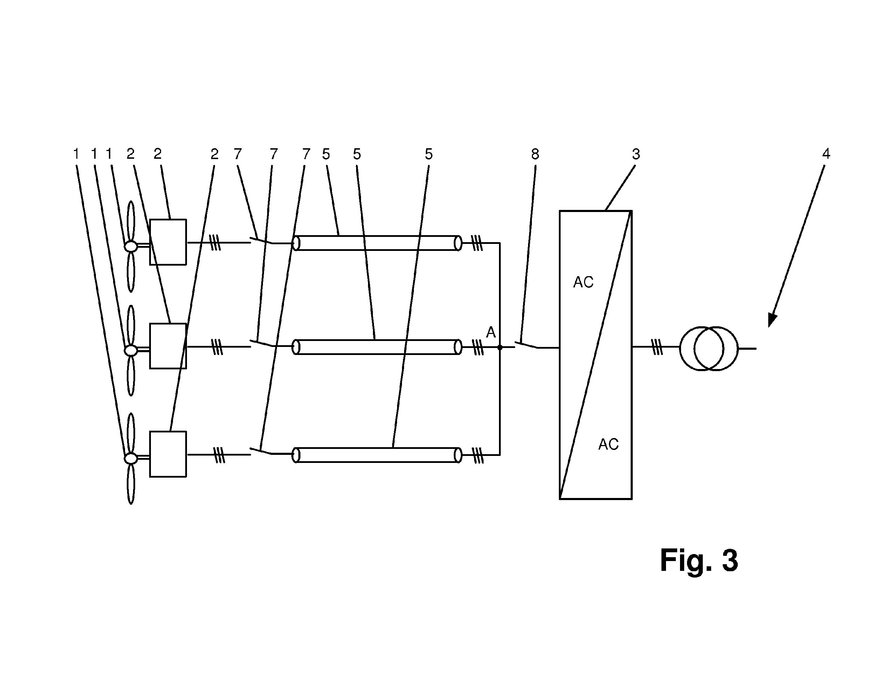

Wie bereits vorstehend dargelegt, dient die Umrichtereinheit 3 der elektrischen Anbindung der Generatoren 2, die jeder für sich eine Wechselspannung mit der Frequenz f erzeugen, an ein elektrisches Wechselspannungsnetz 4. Die Umrichtereinheit 4 weist dazu beispielsweise einen eingangsseitigen Gleichrichter auf, der auf seiner Gleichspannungsseite mit einem Gleichspannungszwischenkreis verbunden ist. Ein Wechselrichter ist mit seiner Gleichspannungsseite mit diesem Gleichspannungszwischenkreis verbunden, wobei der Wechselrichter mit seiner Wechselspannungsseite mit dem besagten Wechselspannungsnetz 4 verbindbar ist. Jegliche, dem Fachmann bekannte Ausführungsform des Gleichrichters, Gleichspannungszwischenkreises und des Wechselrichters sind denkbar. Denkbar ist es auch, die Umrichtereinheit 3 als Direktumrichter beziehungsweise Matrixumrichter auszubilden. Gemäss Fig. 1 ist jeder Generator 2 vorzugsweise über jeweils ein Wechselstromkabel 5 mit der Umrichtereinheit 3 verbunden ist. Die in Fig. 2 und in den nachfolgend noch näher erläuterten Ausführungsformen nach Fig. 3 bis Fig. 5 dargestellte dreiphasige Verbindung der Generatoren 2 mit der Umrichtereinheit 3 ist nicht zwingend. Denkbar ist auch eine einphasige Verbindung wie auch jegliche Art von mehrphasigen Verbindungen.

Die Umrichtereinheit 3 nach Fig. 3 ist mittels eines Umrichtertrennmittels 8 vom Wechselstromkabel 5 trennbar. Diese Trennung kann beispielsweise zu Wartungs- und Prüfzwecken genutzt werden oder kann im Fehlerfall einer Komponente des Energiesystems sinnvoll sein.

In Fig. 3 ist eine zweite Ausführungsform des erfindungsgemässen Energiesystems, insbesondere eines Gezeitenenergiesystems, gezeigt. Die Generatoren 2 nach Fig. 3 sind über Wechselstromkabel 5 an einem Verbindungspunkt A miteinander verbunden. Desweiteren ist die Umrichtereinheit 3 gemäss Fig. 3 mit dem Verbindungspunkt A verbunden. Dadurch ist nur noch einen einzige Verbindung zu der Umrichtereinheit 3 notwenig, d.h. die einzelnen Verbindungen der Generatoren nach Fig. 2 zu der Umrichtereinheit 3 entfallen. Insgesamt kann das Energiesystem dadurch weiter vereinfacht werden. Nach Fig. 3 ist die Umrichtereinheit ferner mittels eines Umrichtertrennmittels 8 vom Verbindungspunkt A trennbar. Diese Trennung kann beispielsweise zu Wartungs- und Prüfzwecken genutzt werden oder kann im Fehlerfall einer Komponente des Energiesystems sinnvoll sein.

Nach Fig. 2 und Fig. 3 ist jeder Generator 2 vorzugsweise mittels eines Generatortrennmittels 7 vom Wechselstromkabel 5 trennbar. Auch diese Trennung kann beispielsweise zu Wartungs- und Prüfzwecken genutzt werden oder kann im Fehlerfall einer Komponente des Energiesystems sinnvoll sein.

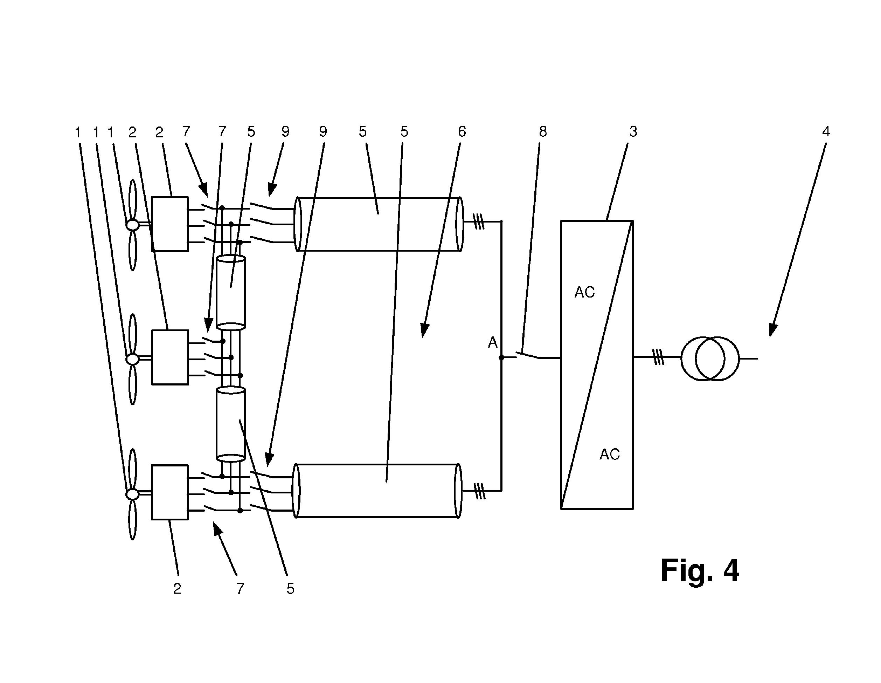

Gemäss einer dritten Ausführungsform des erfindungsgemässen Energiesystems nach Fig. 4 sind die Generatoren 2 über einen Ringverbund 7 miteinander verbunden, wobei dann die Umrichtereinheit 3 mit dem Ringverbund 6 verbunden ist. Ein solcher Ringverbund 6 ist sehr einfach zu realisieren, wobei gegenüber der Ausführungsform des erfindungsgemässen Energiesystems nach Fig. 3 weitere Verbindungen zu der Umrichtereinheit 3 eingespart werden können. Die Umrichtereinheit 3 ist mittels eines Umrichtertrennmittels 8 vom Ringverbund 6 trennbar. Diese Trennung kann beispielsweise zu Wartungs- und Prüfzwecken genutzt werden oder kann im Fehlerfall einer Komponente des Energiesystems sinnvoll sein.

Gemäss Fig. 4 ist jeder Generator 2 mittels eines Generatortrennmittels 7 vom Ringverbund 6 trennbar. Die Trennung eines Generators 2 kann beispielsweise zu Wartungs- und Prüfzwecken genutzt werden oder kann im Fehlerfall einer Komponente des Energiesystems allgemein oder eines fehlerhaften Generators 2 sinnvoll sein. Der jeweilige Generator 2 lässt sich mit dem Generatortrennmittel 7 auf einfache, unkomplizierte Weise schnell vom restlichen Energiesystem trennen beziehungsweise isolieren. Vorzugsweise ist auch der Ringverbund 6 mittels eines Unterbrechungsmittels 9 unterbrechbar. Eine solche Unterbrechung des Ringverbundes 6 kann beispielsweise zu Wartungs- und Prüfzwecken genutzt werden oder kann im Fehlerfall einer Komponente des Energiesystems sinnvoll sein. Nach Fig. 4 ist der Ringverbund 7 als Wechselstromkabel 5 ausgeführt.

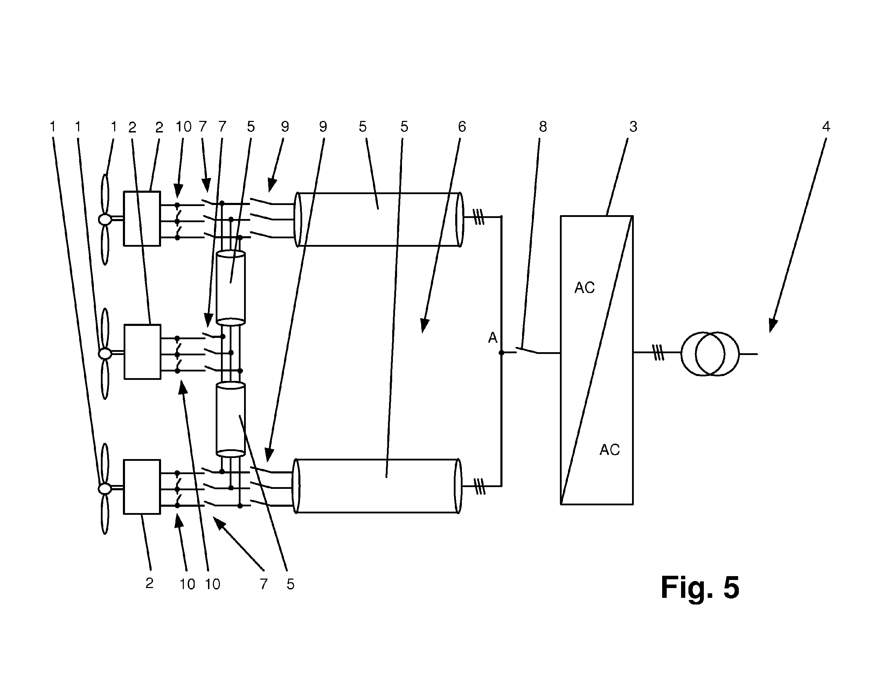

In Fig. 5 ist eine vierte Ausführungsform des erfindungsgemässen Energiesystems, insbesondere eines Gezeitenenergiesystems, dargestellt. In dem in Fig. 5 gezeigten Energiesystem ist jeder Generator 2 mittels eines Kurzschlussmittels 10 kurzschliessbar. Vorzugsweise ist es allgemein, also auch bei den vorstehend bereits detailliert erläuterten Ausführungsformen des erfindungsgemässen Energiesystems nach Fig. 2 bis Fig. 4, denkbar, dass jeder Generator 2 mittels eines Kurzschlussmittels 10 kurzschliessbar ist. Ein solcher Kurzschluss eines Generators 2 mittels des Kurzschlussmittels 10 kann beispielsweise im Fehlerfall des Generators 2 sinnvoll sein oder kann allgemein bei Wartungs- und Prüfzwecken des Energiesystems genutzt werden oder kann allgemein im Fehlerfall einer Komponente des Energiesystems sinnvoll sein.

Sollen grosse elektrische Energiemengen in ein elektrisches Wechselspannungsnetz 4 eingespeist werden, ist es bezüglich der Ausführungsform nach Fig. 3 optional denkbar, dass mindestens eine weitere Umrichtereinheit zur elektrischen Anbindung an das elektrisches Wechselspannungsnetz 4 vorgesehenen ist, wobei die weitere Umrichtereinheit dann mit dem Verbindungspunkt A verbunden ist. Eine solche weitere Umrichtereinheit ist in Fig. 3 der Übersichtlichkeit halber nicht dargestellt.

Bei grossen elektrischen Energiemengen, die in ein elektrisches Wechselspannungsnetz 4 eingespeist werden sollen, ist es ferner bezüglich der Ausführungsformen nach Fig. 4 und Fig. 5 optional denkbar, dass mindestens eine weitere Umrichtereinheit zur elektrischen Anbindung an das elektrisches Wechselspannungsnetz 4 vorgesehenen ist, wobei die weitere Umrichtereinheit dann mit dem Ringverbund 6 verbunden ist. Eine solche weitere Umrichtereinheit ist in Fig. 34 und Fig. 5 der Übersichtlichkeit halber nicht gezeigt.

### Bezugszeichenliste

- 1: Turbine, insbesondere Gezeitenkraftenergieturbine, Windkraftturbine, Wellen-kraftenergieturbine oder Wasserkraftturbine
- 2: Generator
- 3: Umrichtereinheit
- 4: elektrisches Wechselspannungsnetz
- 5: Wechselstromkabel
- 6: Ringverbund
- 7: Generatortrennmittel
- 8: Umrichtertrennmittel
- 9: Unterbrechungsmittel
- 10: Kurzschlussmittel

## Patentansprüche

1. Energiesystem umfassend
mindestens zwei Turbinen (1), welche als Gezeitenkraftenergieturbine, Windkraftturbine, Wellenkraftenergieturbine oder Wasserkraftturbine ausgebildet sind, wobei jede Turbine (1) mit einem Generator (2) verbunden ist und jeder Generator (2) eine Wechselspannung erzeugt, wobei die Wechselspannungen dieselbe Frequenz (f) aufweisen, **dadurch gekennzeichnet,**
**dass** die Frequenz (f) zeitvariabel ist, und
**dass** eine Umrichtereinheit (3) zur elektrischen Anbindung an ein elektrisches Wechselspannungsnetz (4) vorgesehenen ist und die Generatoren (2) mit der Umrichtereinheit (3) verbunden sind.

2. Energiesystem nach Anspruch 1, **dadurch gekennzeichnet, dass** jeder Generator (2) über jeweils ein Wechselstromkabel (5) mit der Umrichtereinheit (3) verbunden ist.

3. Energiesystem nach Anspruch 2, **dadurch gekennzeichnet, dass** die Umrichtereinheit (3) mittels eines Umrichtertrennmittels (8) vom Wechselstromkabel (5) trennbar ist.

4. Energiesystem nach Anspruch 1, **dadurch gekennzeichnet, dass** die Generatoren (2) über Wechselstromkabel (5) an einem Verbindungspunkt (A) miteinander verbunden sind, und
dass die Umrichtereinheit (3) mit dem Verbindungspunkt (A) verbunden ist.

5. Energiesystem nach Anspruch 4, **dadurch gekennzeichnet, dass** die Umrichtereinheit (3) mittels eines Umrichtertrennmittels (8) vom Verbindungspunkt (A) trennbar ist.

6. Energiesystem nach einem der Ansprüche 2 bis 5, **dadurch gekennzeichnet, dass** jeder Generator (2) mittels eines Generatortrennmittels (7) vom Wechselstromkabel (5) trennbar ist.

7. Energiesystem nach Anspruch 1, **dadurch gekennzeichnet, dass** die Generatoren (2) über einen Ringverbund (6) miteinander verbunden sind, und
dass die Umrichtereinheit (3) mit dem Ringverbund (6) verbunden ist.

8. Energiesystem nach Anspruch 7, **dadurch gekennzeichnet, dass** die Umrichtereinheit (3) mittels eines Umrichtertrennmittels (8) vom Ringverbund (6) trennbar ist.

9. Energiesystem nach Anspruch 7 oder 8, **dadurch gekennzeichnet, dass** jeder Generator (2) mittels eines Generatortrennmittels (7) vom Ringverbund (6) trennbar ist.

10. Energiesystem nach einem der Ansprüche 7 oder 9, **dadurch gekennzeichnet**, der Ringverbund (6) mittels eines Unterbrechungsmittels (9) unterbrechbar ist.

11. Energiesystem nach einem der Ansprüche 7 bis 10, **dadurch gekennzeichnet, dass** der Ringverbund (7) als Wechselstromkabel (5) ausgeführt ist.

12. Energiesystem nach einem der vorhergehenden Ansprüche, **dadurch gekennzeichnet, dass** jeder Generator (2) mittels eines Kurzschlussmittels (10) kurzschliessbar ist.

13. Energiesystem nach Anspruch 4 oder 5, **dadurch gekennzeichnet, dass** mindestens eine weitere Umrichtereinheit zur elektrischen Anbindung an das elektrisches Wechselspannungsnetz (4) vorgesehenen ist, wobei die weitere Umrichtereinheit mit dem Verbindungspunkt (A) verbunden ist.

14. Energiesystem nach einem der Ansprüche 7 bis 11, **dadurch gekennzeichnet, dass** mindestens eine weitere Umrichtereinheit zur elektrischen Anbindung an das elektrisches Wechselspannungsnetz (4) vorgesehenen ist, wobei die weitere Umrichtereinheit mit dem Ringverbund (6) verbunden ist.
